# EUROPEAN PATENT APPLICATION

(11) **EP 3 970 889 A1**
(43) Date of publication of application: **23.03.2022**
(21) Application number: 20207709.5
(22) Date of filing: 16.11.2020
(51) Int. Cl.: B23B 31/08, B23B 31/20, B23B 31/26, B23B 31/30, B23B 37/00, B23Q 3/155, B23Q 5/04

(54) **ULTRASONIC SPINDLE DEVICE WITH AUTOMATIC TOOL CHANGER**

(30) Priority: 16.09.2020 KR 20200118875
(71) Applicant: RPS, Daejeon 34109 (KR)
(72) Inventor: LEE, Dong Heon, 35249 Daejeon (KR); YOOK, In-Soo, 34191 Daejeon (KR); KIM, Chang Soo, 34010 Daejeon (KR); CHAE, Jun Soo, 34120 Daejeon (KR); SO, Yoon Ho, 34120 Daejeon (KR); HAN, Gwang Sin, 34011 Daejeon (KR); KIM, Woong Kyem, 34011 Daejeon (KR)
(74) Representative: BCKIP

(57) **Abstract**

An ultrasonic spindle device with automatic tool changer is disclosed. The ultrasonic spindle device includes a housing member (100) having an inner space along a longitudinal direction, a shaft member (200) rotatably disposed in the inner space and having a hollow portion, an ultrasonic oscillation member (300) disposed in the hollow portion and having a through hole, a drawbar member (400) disposed in the hollow portion to move in a front-rear direction, a portion of the drawbar member being inserted into the through hole and passing through the ultrasonic oscillation member, a clamping member (500) connected to a front end of the drawbar member and clamping a tool, a portion of the clamping member being disposed outside the housing member, a rotation means (800) rotating the shaft member, and a cylinder member (900) moving the drawbar member forward or backward along a longitudinal direction of the shaft member.

## Description

### CROSS-REFERENCE TO RELATED APPLICATION

This application claims priority to and the benefit of Korean Patent Application No. 10-2020-0118875 filed on 16^{th} of September, 2020, which is incorporated herein by reference for all purposes as if fully set forth herein.

### TECHNICAL FIELD

The present disclosure relates to an ultrasonic spindle device with automatic tool changer (ATC).

### BACKGROUND

An automatic tool changer (ATC) spindle that is generally used in a machining center is a rotating shaft of which a shaft end is mounted on a workpiece or a cutting tool, and is used to make the cutting by rotating at high speed.

A related art 'automatic tool changer of ultrasonic machine' is disclosed in Korean Patent No. 10-1904799. According to this document, it adopted a detachable method in which a processing tool and a holder 4 are fixed by screws 18 by rotating a spindle. Thus, an external motor 11 capable of detecting a torque, a coupling 12 for receiving power from the motor, a special support horn 17 for attaching and detaching the processing tool and the holder, a screw-shaped holder 4 and the like are required to change the tool. Hence, there is a problem that the automatic tool changer occupies a lot of space due to an increase in its size.

In addition, an ultrasonic spindle is disclosed in Korean Patent Publication No. 10-2012-0117156 (titled 'Ultrasonic spindle device'), Korean Patent No. 10-1879451 (titled 'Ultrasonic air bearing spindle system'), Korean Patent No. 10-1604989 (titled 'Ultrasonic air bearing spindle'), and the like. However, all the three documents have the disadvantage of having to manually change the tool.

### SUMMARY

An object of the present disclosure is to address the above-described and other needs and/or problems.

Another object of the present disclosure is to provide an ultrasonic spindle device automatically changing a tool mounted on a clamping member.

Another object of the present disclosure is to provide an ultrasonic spindle device remarkably reducing a tool change time.

Another object of the present disclosure is to provide an ultrasonic spindle device automatically changing a tool without a separate additional device.

In one aspect, there is provided an ultrasonic spindle device with automatic tool changer comprising a housing member having an inner space along a longitudinal direction of the housing member; a shaft member being rotatably disposed in the inner space and having a hollow portion; an ultrasonic oscillation member being disposed at a front in the hollow portion and having a through hole; a drawbar member being disposed in the hollow portion to be able to move in a front-rear direction, a portion of the drawbar member being inserted into the through hole and passing through the ultrasonic oscillation member; a clamping member being connected to a front end of the drawbar member and clamping a tool, a portion of the clamping member being disposed outside the housing member; a rotation means being positioned in the inner space and rotating the shaft member; and a cylinder member moving the drawbar member forward or backward along a longitudinal direction of the shaft member.

According to another aspect of the present disclosure, the drawbar member includes a drawbar forming a front portion of the drawbar member and a pushrod forming a rear portion of the drawbar member. The drawbar passes through the through hole, and the shaft member is disposed outside the pushrod. The rotation means is disposed in the perimeter of the shaft member.

According to another aspect of the present disclosure, the cylinder member includes a plurality of cylinders being disposed at a rear end of the housing member and being formed in multiple-level in the front-rear direction; and a plurality of piston portions, each of which is disposed to be able to move in the front-rear direction inside each cylinder. The plurality of piston portions are sequentially connected in the front-rear direction. A foremost piston portion among the plurality of piston portions is connected to a rear end of the drawbar member. When the piston portion moves in the front-rear direction, the drawbar member moves in the front-rear direction depending on a moving direction of the piston portion.

According to another aspect of the present disclosure, the ultrasonic spindle device with automatic tool changer further comprises a ball bearing member being disposed in the inner space and surrounding the shaft member.

According to another aspect of the present disclosure, the ultrasonic spindle device with automatic tool changer further comprises an air bearing member being disposed in the inner space and surrounding the shaft member, and an air flow path supplying an air to the air bearing member is formed in the housing member.

Effects of the ultrasonic spindle device with automatic tool changer according to the present disclosure are described as follows.

According to at least one aspect of the present disclosure, the present disclosure can remarkably reduce a tool change time and achieve simplification of the process and simplification of the device.

According to at least one aspect of the present disclosure, the present disclosure can expect effects of reducing a processing time, extending tool life, and improving precision of workpiece, compared to related art ultrasonic spindles.

According to at least one aspect of the present disclosure, the present disclosure can implement spindles automatically changing tools without a separate additional device by adding an automatic tool changer to advantages of an ultrasonic spindle, and thus has a very advantageous effect in terms of cost.

According to at least one aspect of the present disclosure, the present disclosure can expect not only a low cost effect, but also a simplification of a structure and a space saving effect since an automatic tool changer (ATC), the ultrasonic oscillation member capable of automatic tool change, and the rotation means rotating the shaft member are included in a spindle.

### BRIEF DESCRIPTION OF THE DRAWINGS

The accompanying drawings, which are included to provide a further understanding of the disclosure and are incorporated in and constitute a part of the disclosure, illustrate embodiments of the disclosure and together with the description serve to explain the principle of the disclosure.
FIG. 1 is a cross-sectional view illustrating a ball bearing ultrasonic spindle device with automatic tool changer according to an embodiment of the present disclosure.
FIG. 2 illustrates that a cylinder member of FIG. 1 operates and a clamping member moves forward.
FIG. 3 illustrates a rear surface of a housing member of FIG. 1.
FIG. 4 is a cross-sectional view illustrating an air bearing ultrasonic spindle device with automatic tool changer according to an embodiment of the present disclosure.
FIG. 5 illustrates that a cylinder member of FIG. 4 operates and a clamping member moves forward.
FIG. 6 illustrates a rear surface of a housing member of FIG. 4.
FIG. 7 illustrates an appearance of a housing member of FIG. 4.

### DETAILED DESCRIPTION

Reference will now be made in detail to embodiments of the disclosure, examples of which are illustrated in the accompanying drawings. Wherever possible, the same reference numbers will be used throughout the drawings to refer to the same or like parts. In general, a suffix such as "module" and "unit" may be used to refer to elements or components. Use of such a suffix herein is merely intended to facilitate description of the present disclosure, and the suffix itself is not intended to give any special meaning or function. It will be noted that a detailed description of known arts will be omitted if it is determined that the detailed description of the known arts can obscure the embodiments of the disclosure. The accompanying drawings are used to help easily understand various technical features and it should be understood that embodiments presented herein are not limited by the accompanying drawings. As such, the present disclosure should be construed to extend to any alterations, equivalents and substitutes in addition to those which are particularly set out in the accompanying drawings.

The terms including an ordinal number such as first, second, etc. may be used to describe various components, but the components are not limited by such terms. The terms are used only for the purpose of distinguishing one component from other components.

When any component is described as "being connected" or "being coupled" to other component, this should be understood to mean that another component may exist between them, although any component may be directly connected or coupled to the other component. In contrast, when any component is described as "being directly connected" or "being directly coupled" to other component, this should be understood to mean that no component exists between them.

A singular expression can include a plural expression as long as it does not have an apparently different meaning in context.

In the present disclosure, terms "include" and "have" should be understood to be intended to designate that illustrated features, numbers, steps, operations, components, parts or combinations thereof are present and not to preclude the existence of one or more different features, numbers, steps, operations, components, parts or combinations thereof, or the possibility of the addition thereof.

An ultrasonic spindle device with automatic tool changer according to embodiments of the present disclosure can be applied to a ball bearing ultrasonic spindle device and an air bearing ultrasonic spindle device.

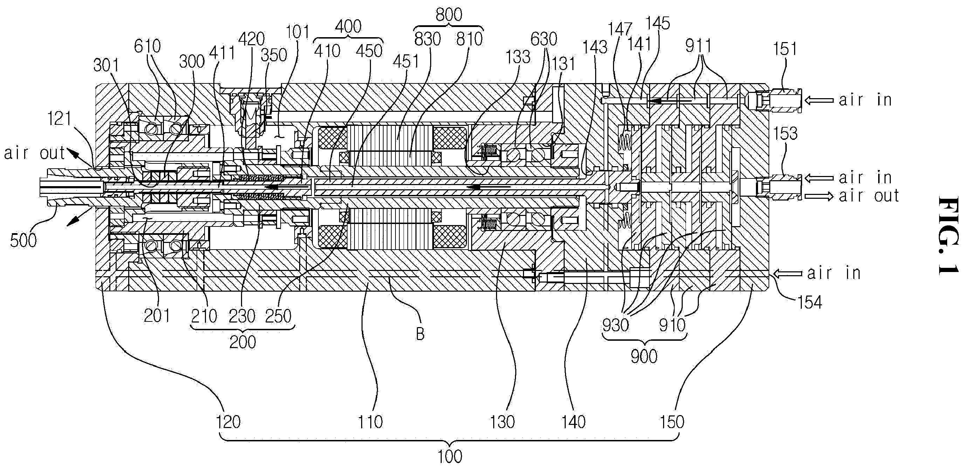

A ball bearing ultrasonic spindle device with automatic tool changer according to an embodiment of the present disclosure is illustrated in FIGS. 1 to 3.

As illustrated in FIG. 1, a ball bearing ultrasonic spindle device with automatic tool changer includes a housing member 100, a shaft member 200, an ultrasonic oscillation member 300, a drawbar member 400, a clamping member 500, ball bearing members 610 and 630, a rotation means 800, and a cylinder member 900.

Referring to FIG. 1, the housing member 100 has an inner space 101 along a longitudinal direction. The inner space 101 formed in the housing member 100 is opened to both a front end and a rear end of the housing member 100.

In this embodiment, the housing member 100 is comprised of a main housing 110, a front cover 120, a rear bearing housing 130, a connecting body 140, and a rear cover 150.

The main housing 110 is a cylindrical shape and has the inner space 101.

The front cover 120 is provided at a front end of the main housing 110, closes the inner space 101 opened to the front end, and has a clamping through hole 121 through which the clamping member 500 passes.

The rear bearing housing 130 is provided at a rear end of the main housing 110, closes the inner space 101 opened to the rear end, has a bearing seating groove 131 that allows the ball bearing member 630 to be described later to be seated, and has a shaft through hole 133, in the bearing seating groove 131, through which a rear shaft 250 passes.

The connecting body 140 is mounted on a rear end of the rear bearing housing 130. On a rear surface of the connecting body 140, a piston portion mounting space 141 on which a piston portion 930 positioned at the foremost of the cylinder member 900 to be described later is mounted is formed. In the piston portion mounting space 141, a pushrod through hole 143, through which a pushrod 450 passes, and a second air passage 145 connecting the pushrod through hole 143 to a first air passage 911 of a cylinder portion 910 are formed. The cylinder member 900 is disposed at a rear end of the connecting body 140, and the rear cover 150 is mounted on a rear end of the cylinder member 900.

The rear cover 150 is provided with a first air supply nozzle 151 and a second air supply nozzle 153, and their actions will be described in detail below.

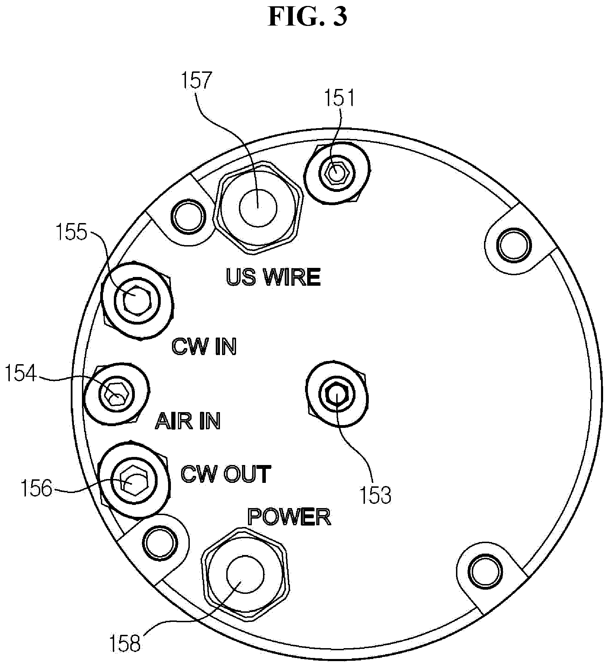

As illustrated in FIG. 3, the rear cover 150 is provided with an air inlet 154, a CW inlet 155, a CW outlet 156, an US WIRE 157, and a POWER 158.

As illustrated in FIG. 1, an air introduced into the air inlet 154 moves along an air flow path 'B' formed over the rear cover 150, the cylinder portion 910, the connecting body 140, the main housing 110, and the front cover 120 and is finally discharged into a gap between the front cover 120 and the clamping member 500, thereby serving as an air curtain that prevents foreign substances from entering the housing member 100 from the outside.

The CW inlet 155 and the CW outlet 156 serve to allow cooling water to be introduced into the housing member 100 and to be discharged to the outside.

The US WIRE 157 is a part where wires are routed from an ultrasonic oscillator so that it can supply power to the ultrasonic oscillation member 300.

The POWER 158 is a part where wires are routed from a stator 830 so that it can supply power to the stator 830 that is the rotation means 800 rotating the shaft member 200.

Referring to FIG. 1, the shaft member 200 is rotatably provided in the inner space 101 and has a hollow portion 201.

In this embodiment, the shaft member 200 is comprised of a front shaft 210, a middle shaft 230, and a rear shaft 250.

The front shaft 210, the middle shaft 230, and the rear shaft 250 are assembled by welding. The rear shaft 250 passes through the shaft through hole 133 of the rear bearing housing 130.

Referring to FIG. 1, the ultrasonic oscillation member 300 is disposed at the front inside the hollow portion 201.

In this embodiment, as the shaft member 200 is comprised of three parts, the ultrasonic oscillation member 300 is disposed in the hollow portion 201 formed in the front shaft 210, and rotates with the shaft member 200 by being fixed to the front shaft 210 when the shaft member 200 rotates.

The ultrasonic oscillation member 300 has a through hole 301 through which the drawbar member 400 to be described below passes.

An alloy brush 350 supplying power to the ultrasonic oscillation member 300 is mounted on one side of the main housing 110. The alloy brush 350 is electrically connected to the ultrasonic oscillation member 300 and supplies power to the ultrasonic oscillation member 300.

Referring to FIG. 1, the drawbar member 400 is provided to be able to move in a front-rear direction in the hollow portion 201, and rotates with the shaft member 200 upon rotation of the shaft member 200. Since the drawbar member 400 is disposed along a longitudinal direction in the entire hollow portion 201 of the shaft member 200 and has an elongated shape, it is preferable in terms of improving operability that the drawbar member 400 is divided into a drawbar 410 forming a front side and the pushrod 450 forming a rear side. In particular, it is more preferable that the drawbar 410 forming the front side is formed with a relatively short length, and the pushrod 450 forming the rear side is formed with a relatively long length. FIG. 1 illustrates that there is some gap between the drawbar 410 and the pushrod 450, by way of example. In some embodiments, the drawbar 410 and the pushrod 450 may contact each other.

The drawbar 410 is disposed in the hollow portion 201 formed inside the front shaft 210 and the middle shaft 230. In this instance, the drawbar 410 is elastically supported by a disc spring 420 so as to be positioned in the rear. The drawbar 410 passes through the through hole 301 of the ultrasonic oscillation member 300. A front end of the drawbar member 400 passing through the ultrasonic oscillation member 300 as described above is disposed at the foremost of the inner space 101.

The pushrod 450 is disposed in the hollow portion 201 formed inside the rear shaft 250, and a rear end of the pushrod 450 passes through the pushrod through hole 143 of the connecting body 140.

A third air passage 451 is formed inside the pushrod 450 configured as above, and a fourth air passage 411 is formed inside the drawbar 410. The third air passage 451 formed inside the pushrod 450 is connected to the second air passage 145 of the connecting body 140.

Referring to FIG. 1, the clamping member 500 is connected to a front end of the drawbar member 400. That is, the clamping member 500 is mounted on a front end of the drawbar 410 and passes through the clamping through hole 121 of the front cover 120, and thus a portion of the clamping member 500 is disposed outside the housing member 100. Hence, the tool is clamped to the clamping member 500.

The figures of the present disclosure illustrate the clamping member 500 in the form of a collet, by way of example. In some embodiments, the clamping member 500 may be in the form of a holder and may be any form capable of holding the tool.

Referring to FIG. 1, the ball bearing members 610 and 630 that enable the shaft member 200 to rotate from the housing member 100 are provided to surround the shaft member 200 in the inner space 101.

In this embodiment, two ball bearing members 610 are provided to surround the front shaft 210 forming a front side of the shaft member 200, and two ball bearing members 630 are provided to surround the rear shaft 250 forming a rear side of the shaft member 200. In particular, the two ball bearing members 630 provided to surround the rear shaft 250 are seated in the bearing seating groove 131 of the rear bearing housing 130.

The number and the arrangement of ball bearing members 610 and 630 presented in the present disclosure are merely an example, and the number and the arrangement of ball bearing members 610 and 630 may be changed according to an embodiment.

Referring to FIG. 1, the rotation means 800 is provided in the inner space 101 of the main housing 110 and rotates the shaft member 200 that is provided to be rotatable by the ball bearing members 610 and 630 in the inner space 101 of the housing member 100. In particular, it is preferable that the rotation means 800 is provided in the perimeter of the rear shaft 250 disposed outside the pushrod 450.

In this embodiment, the rotation means 800 is configured as a motor including a rotor 810 and a stator 830.

The rotor 810 is provided to surround the rear shaft 250, and the stator 830 is provided to surround the rotor 810.

Based on such a configuration, when a voltage is applied to a coil wound on the stator 830, an induction current is generated in a coil of the rotor 810 by the voltage applied to the coil of the stator 830, and thus the rotor 810 rotates about a central axis. Hence, as the rear shaft 250 rotates with the rotor 810, and as a result the front shaft 210 and the middle shaft 230 connected to the rear shaft 250 rotate with the rotor 810, the entire shaft member 200 rotates.

Referring to FIG. 1, the cylinder member 900 moves the drawbar member 400 forward or backward along the longitudinal direction of the housing member 100.

In this embodiment, since the drawbar member 400 is comprised of the drawbar 410 and the pushrod 450, the cylinder member 900 moves the pushrod 450 disposed on the rear side forward or backward. Further, the cylinder member 900 is disposed between the connecting body 140 and the rear cover 150.

In addition, it is preferable that the cylinder member 900 includes a plurality of cylinder portions 910 provided in multi-level and a plurality of piston portions 930, each of which can move in the front-rear direction inside each cylinder portion 910.

The piston portion 930 positioned in the rear is connected to the piston portion 930 positioned at the front, and the piston portion 930 positioned at the foremost is connected to a rear end of the drawbar member 400.

In this embodiment, the piston portion 930 positioned at the foremost can move in the front-rear direction in the piston portion mounting space 141 of the connecting body 140, and is elastically supported by a coil spring 147 so as to be positioned in the rear. Further, the piston portion 930 positioned at the foremost is connected to the pushrod 450 passing through the pushrod through hole 143.

The first air passage 911 is formed in each cylinder portion 910 so that the cylinder portions 910 are connected to each other. The first air passage 911 is connected to the second air passage 145 of the connecting body 140 and is supplied with air from the first air supply nozzle 151 of the rear cover 150. Hence, air is supplied to the first air passage 911 through the first air supply nozzle 151, moves to the third air passage 451 of the pushrod 450 and the fourth air passage 411 of the drawbar 410 through the second air passage 145, and is discharged to the outside of the clamping member 500. As a result, tool cleaning can be performed to clean the inside of the device and the tool.

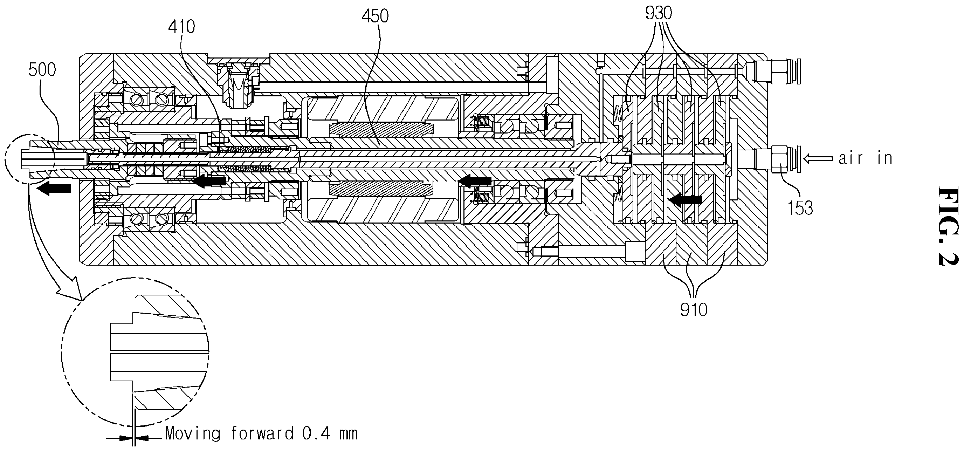

The piston portion 930 positioned at the rearmost can move forward by air that is supplied to the inside of the cylinder portion 910 from the second air supply nozzle 153 of the rear cover 150, or can move backward as air inside the cylinder portion 910 escapes out of the cylinder portion 910 through the second air supply nozzle 153. As described above, the second air supply nozzle 153 is provided to supply air to the cylinder member 900 or discharge air from the cylinder member 900. More specifically, as illustrated in FIG. 2, when air is supplied to the inside of the cylinder portions 910 through the second air supply nozzle 153, the piston portions 930 move forward in turn, and the pushrod 450 moves forward since the piston portion 930 positioned at the foremost is connected to the pushrod 450. In this instance, when the pushrod 450 pushes the drawbar 410 forward, the clamping member 500 connected to the front end of the drawbar 410 finally moves forward. Hence, the tool mounted on the clamping member 500, that is in the form of a collet, can be removed. In this embodiment, for example, the clamping member 500 may move forward by a distance of 0.4 mm, and the moving distance of the clamping member 500 may vary according to an embodiment.

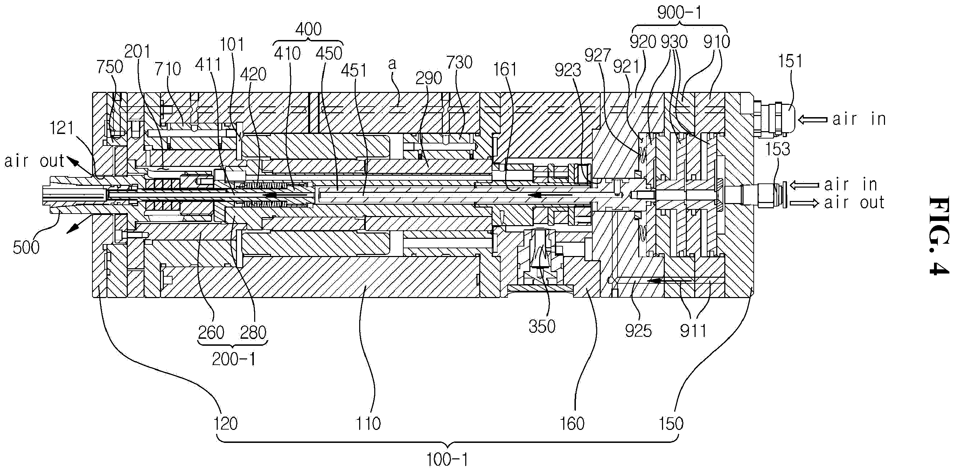

An air bearing ultrasonic spindle device with automatic tool changer according to an embodiment of the present disclosure is illustrated in FIGS. 4 to 7.

As illustrated in FIG. 4, an air bearing ultrasonic spindle device with automatic tool changer includes a housing member 100-1, a shaft member 200-1, an ultrasonic oscillation member 300, a drawbar member 400, a clamping member 500, air bearing members 710 and 730, a rotation means 800, and a cylinder member 900-1.

Structures and components of the air bearing ultrasonic spindle device identical or equivalent to those of the ball bearing ultrasonic spindle device described above are designated with the same reference numerals, and a further description may be briefly made or entirely omitted. Only the components of the air bearing ultrasonic spindle device that have differences from the ball bearing ultrasonic spindle device are described below.

Referring to FIG. 4, the housing member 100-1 has an inner space 101 along a longitudinal direction. The inner space 101 formed in the housing member 100-1 is opened to both a front end and a rear end of the housing member 100-1.

In this embodiment, the housing member 100-1 is comprised of a main housing 110, a front cover 120, a body 160, and a rear cover 150.

The main housing 110 is a cylindrical shape and has the inner space 101.

The front cover 120 is provided at a front end of the main housing 110, closes the inner space 101 opened to the front end, and has a clamping through hole 121 through which the clamping member 500 passes.

The body 160 is provided at a rear end of the main housing 110, closes the inner space 101 opened to the rear end, and has a pushrod through hole 161 through which a pushrod 450 passes.

The cylinder member 900-1 is disposed at a rear end of the body 160, and the rear cover 150 is mounted on a rear end of the cylinder member 900-1.

The rear cover 150 is provided with a third air supply nozzle 152 and a second air supply nozzle 153.

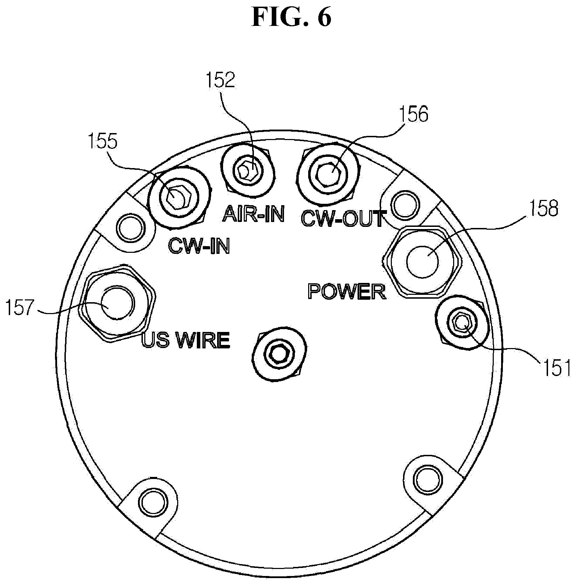

As illustrated in FIG. 6, the rear cover 150 is provided with a CW inlet 155, a CW outlet 156, an US WIRE 157, and a POWER 158.

The CW inlet 155 and the CW outlet 156 serve to allow cooling water to be introduced into the housing member 100-1 and to be discharged to the outside.

The US WIRE 157 is a part where wires are routed from an ultrasonic oscillator so that it can supply power to the ultrasonic oscillation member 300.

The POWER 158 is a part where wires are routed from a stator 830 so that it can supply power to the stator 830 that is the rotation means 800 rotating the shaft member 200-1.

Referring to FIG. 4, the shaft member 200-1 is rotatably provided in the inner space 101 and has a hollow portion 201.

In this embodiment, the shaft member 200-1 is comprised of a front shaft 260 and a rear shaft 280. The front shaft 260 and the rear shaft 280 are assembled by welding after hot assembly (shrink fit).

Referring to FIG. 4, the ultrasonic oscillation member 300 is disposed at the front in the hollow portion 201.

In this embodiment, as the shaft member 200-1 is comprised of two parts, the ultrasonic oscillation member 300 is disposed in the hollow portion 201 formed in the front shaft 260, and rotates with the shaft member 200-1 by being fixed to the front shaft 260 when the shaft member 200-1 rotates.

The ultrasonic oscillation member 300 has a through hole 301 through which the drawbar member 400 to be described below passes.

An alloy brush 350 supplying power to the ultrasonic oscillation member 300 is mounted on one side of the body 160. The alloy brush 350 is electrically connected to the ultrasonic oscillation member 300 and supplies power to the ultrasonic oscillation member 300.

Referring to FIG. 4, the drawbar member 400 is provided to be able to move in a front-rear direction inside the hollow portion 201, and rotates with the shaft member 200-1 upon rotation of the shaft member 200-1. Since the drawbar member 400 is disposed along a longitudinal direction in the entire hollow portion 201 of the shaft member 200-1 and has an elongated shape, it is preferable in terms of improving operability that the drawbar member 400 is divided into a drawbar 410 forming a front side and a pushrod 450 forming a rear side.

The drawbar 410 is disposed in the hollow portion 201 formed inside the front shaft 260 and the rear shaft 280 and is disposed up to a front side of the rear shaft 280. In this instance, the drawbar 410 is elastically supported by a disc spring 420 so as to be positioned in the rear. The drawbar 410 passes through the through hole 301 of the ultrasonic oscillation member 300. A front end of the drawbar member 400 passing through the ultrasonic oscillation member 300 as described above is disposed at the foremost of the inner space 101.

The pushrod 450 is disposed in the hollow portion 201 formed inside the rear shaft 280, and a rear end of the pushrod 450 passes through the pushrod through hole 161 of the body 160 and a pushrod through hole 923 of a cylinder body 920.

A third air passage 451 is formed inside the pushrod 450 configured as above, and a fourth air passage 411 is formed inside the drawbar 410. The fourth air passage 411 formed inside the pushrod 450 is connected to a second air passage 925 of the cylinder body 920.

The clamping member 500 is connected to a front end of the drawbar member 400. That is, the clamping member 500 is mounted on a front end of the drawbar 410 and passes through the clamping through hole 121 of the front cover 120, and thus a portion of the clamping member 500 is disposed outside the housing member 100-1. Hence, the tool is clamped to the clamping member 500.

Referring to FIG. 4, air bearing members 710, 730, and 750 that enable the shaft member 200-1 to rotate from the housing member 100 are provided to surround the shaft member 200-1 in the inner space 101.

In this embodiment, the air bearing member 710 is provided to surround the front shaft 260 forming a front side of the shaft member 200-1, and the air bearing member 730 is provided to surround the rear shaft 280 forming a rear side of the shaft member 200-1. A shaft bush 290 is disposed between the rear shaft 280 and the air bearing member 730. The thrust air bearing 750 is provided between the front cover 120 and the main housing 110.

An air flow path 'a' supplying air to the air bearing member 710, the air bearing member 730, and the thrust air bearing 750 is formed over the main housing 110, the body 160, the cylinder body 920, and a cylinder portion 910 through the connection between them, and the rear cover 150 is supplied with air from the third air supply nozzle 152. Thus, air is supplied to the inside of the air flow path 'a' through the third air supply nozzle 152, and the shaft member 200-1 is floated in the inner space 101 by the air bearing member 710, the air bearing member 730, and the thrust air bearing 750.

As above, the shaft member 200-1 is rotatable in the inner space 101 while the shaft member 200-1 is floated in the inner space 101 by the air bearing member 710, the air bearing member 730, and the thrust air bearing 750. The rotation means 800 rotating the floated shaft member 200-1 is provided in the inner space 101 of the main housing 110. In particular, it is preferable that the rotation means 800 is provided in the perimeter of the rear shaft 280.

In this embodiment, the rotation means 800 is configured as a motor including a rotor 810 and a stator 830.

The rotor 810 is provided to surround the front side of the rear shaft 280, and the stator 830 is provided to surround the rotor 810.

Based on such a configuration, when a voltage is applied to a coil wound on the stator 830, an induction current is generated in a coil of the rotor 810 by the voltage applied to the coil of the stator 830, and thus the rotor 810 rotates about a central axis. Hence, as the rear shaft 280 rotates with the rotor 810, and as a result the front shaft 260 connected to the rear shaft 280 rotates with the rotor 810, the entire shaft member 200-1 rotates.

Referring to FIG. 4, the cylinder member 900-1 moves the drawbar member 400 forward or backward along the longitudinal direction of the housing member 100-1.

In this embodiment, since the drawbar member 400 is comprised of the drawbar 410 and the pushrod 450, the cylinder member 900-1 moves the pushrod 450 disposed on the rear side forward or backward. Further, the cylinder member 900-1 is disposed between the body 160 and the rear cover 150.

In addition, it is preferable that the cylinder member 900-1 includes a plurality of cylinder portions 910 provided in multi-level, the cylinder body 920 between the cylinder portion 910 disposed at the foremost and the body 160, and a plurality of piston portions 930, each of which can move in the front-rear direction inside each cylinder portion 910.

The cylinder portion 910 has a first air passage 911 that is supplied with air from the third air supply nozzle 152 illustrated in FIG. 6.

On a rear surface of the cylinder body 920, a piston portion mounting space 921 on which the piston portion 930 positioned at the foremost of the cylinder member 900 is mounted is formed. In the piston portion mounting space 921, a pushrod through hole 923 through which the pushrod 450 passes, and a second air passage 925 connecting the first air passage 911 of the cylinder portion 910 to the third air passage 451 of the pushrod 450 are formed. Thus, air supplied to the first air passage 911 from the third air supply nozzle 152 illustrated in FIG. 6 moves to the second air passage 925, sequentially moves to the third air passage 451 of the pushrod 450 and the fourth air passage 411 of the drawbar 410, and is discharged between the clamping member 500. As a result, tool cleaning can be performed to clean the inside of the device and the tool.

The piston portion 930 positioned in the rear is connected to the piston portion 930 positioned at the front, and the piston portion 930 positioned at the foremost is connected to a rear end of the drawbar member 400.

In this embodiment, the piston portion 930 positioned at the foremost can move in the front-rear direction in the piston portion mounting space 921 of the cylinder body 920, and is elastically supported by a coil spring 927 so as to be positioned in the rear. Further, the piston portion 930 positioned at the foremost is connected to the pushrod 450 passing through the pushrod through hole 923 of the cylinder body 920.

The piston portion 930 positioned at the rearmost can move forward by air that is supplied to the inside of the cylinder portion 910 from the second air supply nozzle 153 of the rear cover 150, or can move backward as air inside the cylinder portion 910 escapes out of the cylinder portion 910 through the second air supply nozzle 153. As described above, the second air supply nozzle 153 is provided to supply air to the cylinder member 900-1 or discharge air from the cylinder member 900-1.

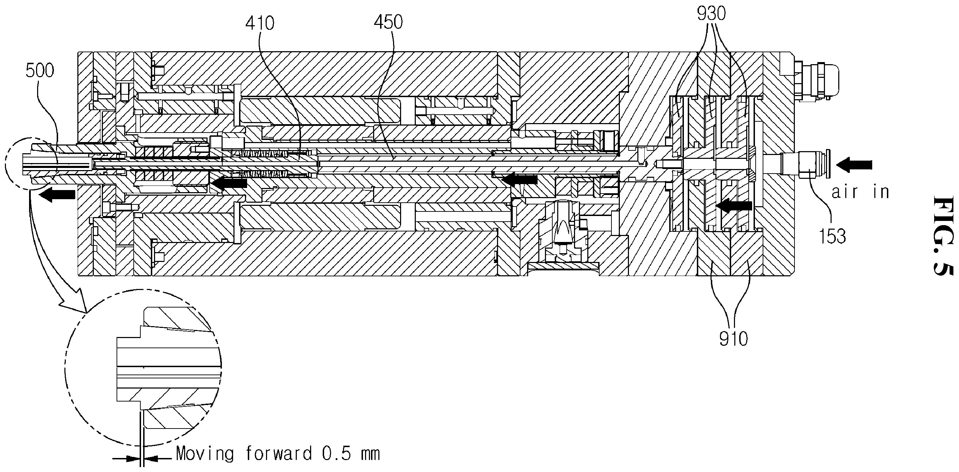

More specifically, as illustrated in FIG. 5, when air is supplied to the inside of the cylinder portions 910 through the second air supply nozzle 153, the piston portions 930 move forward in turn, and the pushrod 450 moves forward since the piston portion 930 positioned at the foremost is connected to the pushrod 450. In this instance, when the pushrod 450 pushes the drawbar 410 forward, the clamping member 500 connected to the front end of the drawbar 410 finally moves forward. Hence, the tool mounted on the clamping member 500, that is in the form of a collet, can be removed. In this embodiment, for example, the clamping member 500 may move forward by a distance of 0.5 mm, and the moving distance of the clamping member 500 may vary according to an embodiment.

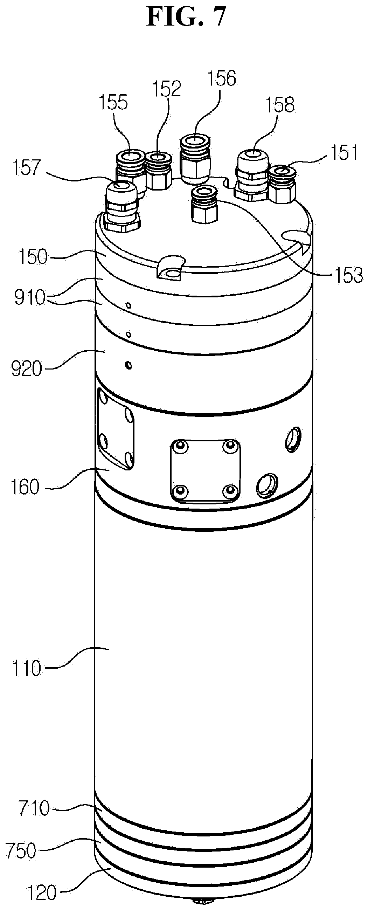

An overall appearance of the air bearing ultrasonic spindle device configured as above is illustrated in FIG. 7.

The air bearing ultrasonic spindle device forms a cylinder by the housing member 100-1 comprised of the main housing 110, the front cover 120, the body 160, and the rear cover 150, the cylinder portion 910, the cylinder body 920, and the air bearing members 710 and 750.

The ultrasonic spindle device with automatic tool changer according to the present disclosure has the following effects.

The ultrasonic spindle device with automatic tool changer according to the present disclosure can automatically change the tool mounted on the clamping member 500 by including the ultrasonic oscillation member 300 having the through hole 301, and the drawbar member 400 that passes through the ultrasonic oscillation member 300 through the through hole 301 and can move in the front-rear direction to thereby enable the automatic tool change. Thus, the ultrasonic spindle device with automatic tool changer according to the present disclosure can remarkably reduce a tool change time and achieve simplification of the process and simplification of the device.

In addition, the ultrasonic spindle device with automatic tool changer according to the present disclosure can expect effects of reducing the processing time, extending the tool life, and improving the precision of the workpiece, compared to the related art ultrasonic spindles.

The preset disclosure can implement a spindle capable of automatically change the tool without a separate additional device by adding the automatic tool changer to advantages of the ultrasonic spindle, and thus has a very advantageous effect in terms of cost.

Since an automatic tool changer (ATC), the ultrasonic oscillation member 300 capable of automatic tool change, and the rotation means 800 rotating the shaft members 200 and 200-1 are included in the spindle, the present disclosure can expect not only a low cost effect, but also a simplification of a structure and a space saving effect.

Although the embodiments have been described with reference to a number of illustrative embodiments thereof, numerous other modifications and embodiments may be devised by those skilled in the art that will fall within the scope of the principles of this disclosure. In particular, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An ultrasonic spindle device with automatic tool changer, comprising:
a housing member having an inner space along a longitudinal direction of the housing member;
a shaft member being rotatably disposed in the inner space and having a hollow portion;
an ultrasonic oscillation member being disposed at a front in the hollow portion and having a through hole;
a drawbar member being disposed in the hollow portion to be able to move in a front-rear direction, a portion of the drawbar member being inserted into the through hole and passing through the ultrasonic oscillation member;
a clamping member being connected to a front end of the drawbar member and clamping a tool, a portion of the clamping member being disposed outside the housing member;
a rotation means being positioned in the inner space and rotating the shaft member; and
a cylinder member moving the drawbar member forward or backward along a longitudinal direction of the shaft member.

2. The ultrasonic spindle device with automatic tool changer of claim 1, wherein the drawbar member includes a drawbar forming a front portion of the drawbar member and a pushrod forming a rear portion of the drawbar member,
wherein the drawbar passes through the through hole,
wherein the shaft member is disposed outside the pushrod,
wherein the rotation means is disposed in the perimeter of the shaft member.

3. The ultrasonic spindle device with automatic tool changer of claim 1 or 2, wherein the cylinder member includes:
a plurality of cylinders being disposed at a rear end of the housing member and being formed in multiple-level in the front-rear direction; and
a plurality of piston portions, each of which is disposed to be able to move in the front-rear direction inside each cylinder,
wherein the plurality of piston portions are sequentially connected in the front-rear direction,
wherein a foremost piston portion among the plurality of piston portions is connected to a rear end of the drawbar member,
wherein when the piston portion moves in the front-rear direction, the drawbar member moves in the front-rear direction depending on a moving direction of the piston portion.

4. The ultrasonic spindle device with automatic tool changer of any one of claims 1 to 3, further comprising a ball bearing member being disposed in the inner space and surrounding the shaft member.

5. The ultrasonic spindle device with automatic tool changer of any one of claims 1 to 4, further comprising an air bearing member being disposed in the inner space and surrounding the shaft member,
wherein an air flow path supplying an air to the air bearing member is formed in the housing member.
